# DEMANDE DE BREVET EUROPEEN

(11) **EP 1 715 201 A2**
(43) Date de publication de la demande: **25.10.2006**
(21) Numéro de dépôt: 06112915.1
(22) Date de dépôt: 21.04.2006
(51) Int. Cl.: F16C 17/10, F16C 17/26, F16C 33/12, F16C 33/14

(54) **Palier lisse entre deux pièces mobiles l'une par rapport à l'autre**

(30) Priorité: 21.04.2005 FR 0551027
(71) Demandeur: SNECMA, 75015 Paris (FR)
(72) Inventeur: Foucher, Christelle, 35690 Acigne (FR); Giffard, Véronique, 91770 Saint Vrain (FR); Mons, Claude, 77176 Savigny Le Temple (FR)
(74) Mandataire: David, Daniel

(57) **Abrégé**

La présente invention porte sur un palier lisse pour aube de redresseur à calage variable avec pivot tourillonnant dans un alésage de carter de turbomachine, le palier lisse comportant un premier élément de palier en un premier métal et un deuxième élément de palier en un deuxième métal de dureté supérieure, caractérisé par le fait que le premier élément de palier (107-108 ; 204-205 ; 307-308-313 ; 414-413) présente une couche en surface durcie par écrouissage.

Grâce à l'invention on réduit l'usure entre les pièces et allonge de façon sensible leur durée de vie.

L'invention s'applique avantageusement aux cas où la première pièce est une aube de redresseur à calage variable et la deuxième pièce est un carter de turbomachine

## Description

La présente invention porte sur un ensemble de deux pièces mobiles l'une par rapport à l'autre, et vise le renforcement de leurs surfaces en contact l'une avec l'autre formant un palier lisse. Elle concerne en particulier les paliers dans un système de redresseurs à calage variable à l'intérieur d'une turbomachine notamment.

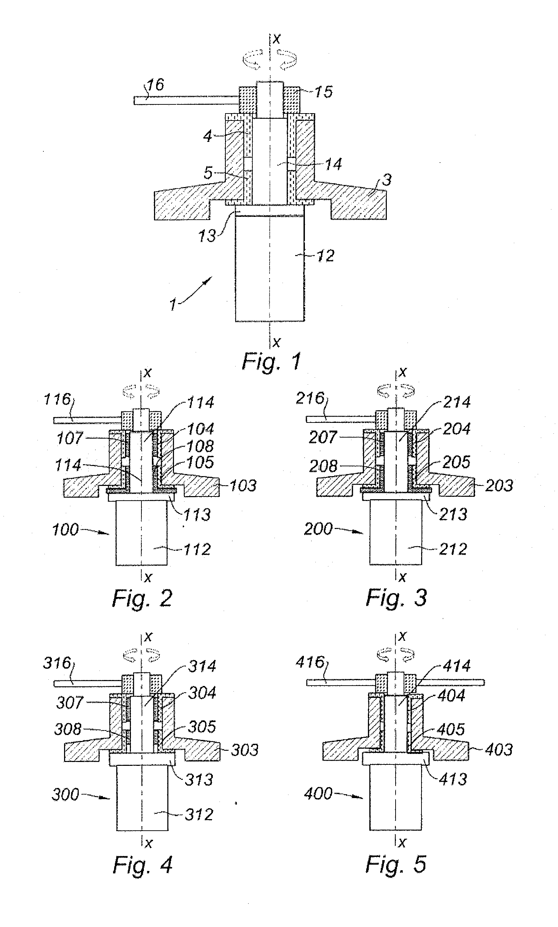

Un système articulé, comme les aubes de redresseur à calage variable d'un compresseur de moteur à turbine à gaz, comprend des pièces en mouvement relatif les unes par rapport aux autres. Sur la figure 1 on a représenté de façon schématique une aube 1 de redresseur à calage variable montée rotative dans le carter 3 de la machine. L'aube comprend une pale 12, une plate forme 13 et une tige formant pivot 14. Le pivot 14 est logé dans un alésage ou orifice radial ménagé dans le carter 3 par l'intermédiaire de douilles 4 et 5 qui sont en contact glissant avec la tige formant pivot 14. Une rondelle 15 maintient l'aube dans son logement. Un levier 16 ; lui-même actionné par des organes non représentés, commande la rotation de l'aube autour de l'axe XX de la tige pour mettre celle-ci dans la position requise par rapport au flux d'air balayant la pale. Les mouvements relatifs résultent du glissement des surfaces en contact formant palier lisse, ici la tige et les douilles. En fonctionnement du moteur, on constate que les sollicitations auxquelles les pièces sont soumises exposent les surfaces en contact à une usure qui peut conduire à des pertes de fonctionnalité du système. La vitesse à laquelle les surfaces en contact se dégradent dépend de nombreux paramètres dont les principaux sont liés à la température de fonctionnement, la pression de contact, l'amplitude des mouvements relatifs et l'environnement.

Dans le cas d'un mécanisme à calage variable d'aubes de turbomachine, une contrainte particulière est la nécessité d'un fonctionnement en milieu non lubrifié. Seule une lubrification sèche peut alors être envisagée pour améliorer les conditions de contact.

Les matériaux utilisés pour les aubes de redresseur sont des alliages de titane, des aciers ou de alliages de nickel. Le matériau du carter est généralement un acier ou un alliage de titane. Les matériaux utilisés pour les douilles proviennent généralement de deux familles : les matériaux organiques et les matériaux non organiques. Lorsque les conditions de température le permettent, pour des températures inférieures à 300-400°C, les matériaux organiques sont employés de préférence alors qu'à une température plus élevée les bases non organiques sont préférées. Toutes les solutions anti-usure connues à ce jour présentent des durabilités limitées.

Le besoin existe de disposer de nouvelles solutions qui permettent d'améliorer sensiblement les durées de fonctionnement des mécanismes de redresseur à calage variable, et de façon plus générale d'ensembles ou de couples de pièces qui sont en contact glissant l'une par rapport à l'autre, par un palier lisse, pendant le fonctionnement de la machine.

La demanderesse s'est fixé comme objectif la réalisation de pièces présentant des surfaces formant éléments de palier lisse, et dont l'usure est réduite, en particulier de proposer de nouveaux couples de matériaux anti-usure.

Notamment elle s'est fixé comme objectif de résoudre le problème de l'usure du contact pivot de redresseur/douille et d'allonger de manière significative la durée de vie des dispositifs à calage variable en proposant une solution peu onéreuse.

Conformément à l'invention on parvient à réaliser ces objectifs, avec un palier lisse pour aube de redresseur à calage variable avec pivot tourillonnant dans un alésage de carter de turbomachine, le palier lisse comportant un premier élément de palier en un premier métal et un deuxième élément de palier en un deuxième métal de dureté supérieure, caractérisé par le fait que le premier élément de palier présente une couche en surface durcie par écrouissage.

Un matériau écrouissable est un matériau dont les propriétés mécaniques augmentent par déformation plastique à froid.

En particulier, le métal du premier élément de palier est un acier austénitique et le métal du deuxième élément de palier est un acier martensitique.

L'écrouissage du premier élément peut être obtenu en employant des techniques connues en tant que telles. Il s'agit du grenaillage de précontrainte, galetage ou frettage HIF. Le cas échéant on peut renforcer encore la dureté de surface par un traitement thermique approprié, notamment un maintien en température inférieure à la température de revenu du matériau. Le but de ce traitement est de diviser la taille des grains préalablement écrouis.

Conformément à une autre caractéristique, on applique un vernis, tel qu'un vernis graphité sur l'une ou l'autre des surfaces en contact afin d'en faciliter le rodage.

Selon un mode de réalisation, le pivot est solidaire d'une frette formant ledit premier élément de palier écroui et l'alésage comprend une douille formant ledit deuxième élément de palier. Cette dernière est notamment en acier martensitique de dureté élevée.

Selon un autre mode de réalisation, le pivot est solidaire d'une frette formant ledit deuxième élément de palier, notamment en acier martensitique de dureté élevée et l'alésage comprend une douille formant ledit premier élément de palier en acier austénitique de dureté intrinsèque plus faible que l'acier martensitique mais dont la surface a été durcie.

Dans le cas particulier où l'aube de redresseur comporte une plate forme, et est en acier austénitique, on traite par écrouissage cette dernière de manière à ce qu'elle forme une couche constituant le dit premier élément de palier en contact avec une douille montée dans l'alésage et en acier de dureté élevée.

Selon un autre mode de réalisation encore, le pivot de l'aube de redresseur à calage variable, notamment en acier austénitique est traité de manière à former le dit premier élément de palier écroui en contact avec une douille montée dans l'alésage formant le dit deuxième élément de palier.

On décrit maintenant plus en détail les différents modes de réalisation de l'invention, appliquée aux surfaces en contact d'un dispositif de redresseurs à calage variable d'une turbomachine en référence aux figures sur lesquelles
- la figure 1 représente schématiquement, en coupe axiale, une aube de redresseur à calage variable d'une turbomachine montée dans l'alésage de carter selon l'art antérieur,
- la figure 2 représente le montage d'une aube de redresseur à calage variable dans un alésage de carter selon un premier mode de réalisation de l'invention,
- la figure 3 représente le montage d'une aube de redresseur à calage variable dans un alésage de carter selon un deuxième mode de réalisation de l'invention,
- la figure 4 représente le montage d'une aube de redresseur à calage variable dans un alésage de carter selon un troisième mode de réalisation de l'invention,
- la figure 5 représente le montage d'une aube de redresseur à calage variable dans un alésage de carter selon un quatrième mode de réalisation de l'invention.
- la figure 6 est un diagramme représentant les profils de dureté obtenus par grenaillage en fonction de la profondeur.

Le montage de la figure 1 représente l'art antérieur, et on constate une usure des surfaces en contact notamment au niveau de la plateforme 13. Les surfaces en contact sont, pour l'aube la surface du pivot 14 et celle de la plate forme, et pour le carter les surfaces internes des deux douilles 4 et 5. La pale 12 en étant balayée par les gaz parcourant la veine est soumise à des contraintes, parallèles au flux gazeux, mais perpendiculaires à l'axe XX de l'aube. Il s'ensuit un couple qui tend à faire basculer l'aube perpendiculairement à l'axe XX. Ces contraintes engendrent notamment une usure par frottement de la plateforme qui s'appuie non uniformément contre la douille 5 du logement. L'usure en s'amplifiant non seulement entraîne des problèmes de fonctionnement du mécanisme mais nuit au maintien de l'aube dans une position correcte par rapport au flux gazeux, et au rendement aérodynamique de la machine. Des opérations de maintenance sont nécessaires.

En outre l'usure, en s'amplifiant, provoque un déversement important du redresseur. Les redresseurs sont liés entre eux au centre par un anneau. Quand tous les redresseurs se déversent, l'anneau avance et vient en contact avec le rotor. On a alors un contact rotor-stator qui n'est pas acceptable. Cela engendre des problèmes de fonctionnement du système, un feu potentiel du moteur et l'arrêt du moteur.

On évite ces problèmes selon l'invention en réduisant l'usure des surfaces en contact. L'invention résulte de la constatation que dans cet exemple l'aube était réalisée dans un alliage austénitique, de référence Z6NCT25 selon la norme Afnor, de microstructure à gros grains et de dureté vickers 330 HV0.3, et que la frette à l'intérieur de la douille 5 était réalisée dans un alliage martensitique de microstructure à petits grains et de dureté vickers plus élevée, 400 HV0.3

On a procédé à des essais de grenaillage de précontrainte et constaté que l'on pouvait ainsi augmenter la dureté du matériau.

Huit essais ont été réalisés, respectivement selon une technique classique de projection par buse avec des billes d'acier de 315 µm et 630 µm à deux intensités différentes, par ultrason avec deux diamètres de billes différents, et classique avec des billes céramiques de 425 µm à deux intensités différentes.

| Aube à calage variable | Type de grenaillage | Billes | Flèche (almen) | Pression ou amplitude |
|---|---|---|---|---|
| 1 | classique | BA315 | F21.5 | 3 bars |
| 2 | | | F15A | 1,7 bar |
| 3 | ultrason | 3 mm | | 80 µm |
| 4 | | 2 mm | | |
| 5 | classique | BA630 | F25A | |
| 6 | | | F40A | |
| 7 | | BC425 | F15A | |
| 8 | | | F 18N | |

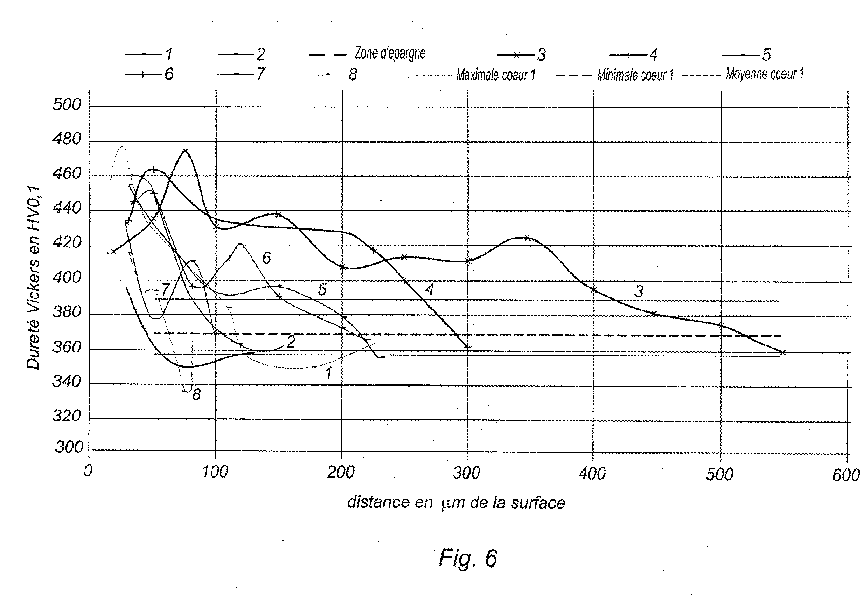

Les profils de dureté vickers obtenus en micro dureté HV0.1 en fonction de la profondeur dans la pièce sont rapportés sur le diagramme de la figure 6.

On constate que le grenaillage permet d'augmenter la dureté de surface du matériau, le grenaillage ultrason montrant une plus grande efficacité.

Par le grenaillage ou autre procédé de mise en compression on amène la dureté de surface d'un premier matériau à celle d'un deuxième matériau de dureté supérieure.

On rappelle ci-après des procédés de mise en compression susceptibles d'être mis en oeuvre dans le cadre de l'invention.
- Le grenaillage classique consiste à projeter sur la surface d'une pièce un média sphérique par l'intermédiaire d'un vecteur d'air ou d'eau permettant d'obtenir un jet directionnel plus ou moins normal à la surface créant par impact une contrainte résiduelle superficielle et une augmentation de la dureté. Les billes peuvent être en verre, en céramique, en acier coulé ou corroyé.
- Par le grenaillage ultrasons, la surface de la pièce traitée est soumise aux impacts multidirectionnels des billes mises en mouvement par l'intermédiaire d'un ensemble acoustique, dans une enceinte étanche.
   L'ensemble acoustique est constitué :
   - d'un générateur,
   - d'un organe piézo-électrique qui transforme l'énergie électrique en vibration mécanique,
   - de booster qui vont amplifier et diriger cette déformation,
   - d'une sonotrode dimensionnée pour se déformer seulement dans l'axe Z. C'est au contact de celle-ci que les billes vont prendre de l'énergie et s'exciter.
- Le grenaillage laser consiste à soumettre la surface d'une pièce à un rayon laser de quelques Gigawatts pendant quelques nanosecondes. La surface de la pièce qui est protégée par un ruban adhésif est ensuite recouverte d'un film d'eau calme. Le contact de l'eau et de l'impulsion laser crée un plasma qui, au moment de son explosion, génère une onde dynamique plane. La progression très rapide de l'onde plane dans la pièce génère la mise en compression et l'augmentation de la dureté.
- Le galetage consiste à faire rouler sur une surface un galet ou une bille sous une pression mécanique ou hydraulique. Cette action engendre par écrouissage une augmentation de la dureté, et la mise en compression.

La solution de l'invention peut être appliquée de différentes façons.

Selon le mode de réalisation de la figure 2, l'aube 100 avec sa pale 112, la plate forme 113 et le pivot 114 est montée dans son logement ménagé dans le carter 103. Le pivot est selon ce mode de réalisation indifféremment en alliage à base nickel, fer ou titane. Un levier 116 commande la rotation de l'aube autour de son pivot. Le pivot 114 est pourvu d'une frette 107 cylindrique et d'une frette 108 comportant une partie cylindrique le long du pivot et une partie en forme de disque recouvrant la plate forme 113. Les frettes 107 et 108 sont en acier et solidaires du pivot 114 avec sa plate forme. Ils forment extérieurement un premier élément de palier qui est au contact des douilles 104 et 105, solidaires de l'alésage ménagé dans le carter. Celles-ci forment intérieurement un deuxième élément de palier qui est en contact avec le premier élément de palier. Conformément à l'invention, les frettes sont en acier notamment austénitique, par exemple référencé Z6NCT25. La surface du premier élément 107-108 a été durcie par écrouissage selon une méthode telle que le grenaillage de précontrainte présenté ci dessus. Les douilles 104 et 105 sont en acier martensitique, par exemple l'acier référencé Z12CNDV12. Ce dernier matériau présente l'avantage de s'oxyder aux températures supérieures à 200°C et de présenter une dureté élevée.

On a représenté sur la figure 3 une variante de réalisation du montage de l'aube de redresseur dans son logement ménagé dans le carter. Les références pour les mêmes éléments portent les mêmes nombres auxquels on a ajouté 100. La solution selon cette variante a consisté à inverser le matériau entre les frettes 208 et 207 d'une part et les douilles 204 et 205 d'autre part. Dans ce cas le premier élément de palier est en acier traité par écrouissage à l'intérieur des douilles. Les frettes sont en acier martensitique et forment les deuxièmes éléments de palier. Comme dans la solution précédente le métal du pivot 214 est indifférent, alliage de fer, de titane ou de nickel.

Selon la variante de la figure 4, les éléments correspondants portent les mêmes références que précédemment avec ajout de 100. les trois constituants, pale 312, plate forme 313 et pivot 314 de l'aube de redresseur 300 sont en acier, notamment austénitique. Le pivot 314 est recouvert de frettes en acier durcies en surface de manière à former le dit premier élément de palier durci par écrouissage. On observe que dans ce cas, on traite directement la surface de la plate forme 313 qui vient au contact de la douille en acier de manière à former également le dit premier élément de palier. Les deux douilles en acier forment un deuxième élément de palier.

Selon la variante de la figure 5, les éléments correspondants portent les mêmes références que précédemment avec ajout de 100. Ici le pivot 414 de l'aube, étant en acier, a été durci en surface par écrouissage, la plate forme 413 également. La surface du pivot et la surface de la plate forme en regard des douilles 404 et 405 forment ensemble le dit premier élément de palier durci. Les surfaces des douilles forment quant à elles le dit deuxième élément de palier.

## Revendications

1. Palier lisse pour aube de redresseur à calage variable avec pivot tourillonnant dans un alésage de carter de turbomachine, le palier lisse comportant un premier élément de palier en un premier métal et un deuxième élément de palier en un deuxième métal de dureté supérieure, **caractérisé par le fait que** le premier élément de palier (107-108 ; 204-205 ; 307-308-313 ; 414-413) présente une couche en surface durcie par écrouissage.

2. Palier selon la revendication 1 dont le métal du premier élément de palier est un acier austénitique et le métal de la deuxième surface est un acier martensitique.

3. Palier selon la revendication 2 dont l'écrouissage est obtenu par un procédé de mise en compression tel que le grenaillage de type classique, ultrasons ou laser, le galetage ou le frettage HIF.

4. Palier selon l'une des revendications précédentes dont le premier élément de palier (107-108 ; 204-205 ; 307-308-313 ; 414-413) est traité thermiquement après avoir été écroui.

5. Palier selon l'une des revendications précédentes dont au moins l'un des premier (107-108 ; 204-205 ; 307-308-313 ; 414-413) ou deuxième (104-105 ; 207-208 ; 304-305 ; 404-405) éléments de palier est revêtu d'une couche de vernis, tel qu'un vernis graphité, facilitant le rodage du contact.

6. Palier selon l'une des revendications 1 à 5 dont le pivot (114 ; 314) est solidaire d'une frette (107-108 ; 307-308) formant le dit premier élément de palier et l'alésage d'une douille (104-105 ; 304-305) formant le dit deuxième élément de palier.

7. Palier selon l'une des revendications 1 à 5 dont le pivot (214) est solidaire d'une frette (207-208) formant ledit deuxième élément de palier et l'alésage d'une douille (204-205) formant ledit premier élément de palier.

8. Palier selon l'une des revendications 1 à 5 dont l'aube de redresseur comporte une plate forme (313 ; 413) avec une couche durcie par écrouissage formant ledit premier élément de palier en contact glissant avec une douille (305 ; 405) dans l'alésage formant ledit deuxième élément de palier.

9. Palier selon l'une des revendications 1 à 5 dont le pivot (414) de l'aube de redresseur comprend une couche durcie par écrouissage formant le dit premier élément de palier en contact glissant avec une douille (404-405) de l'alésage formant le dit deuxième élément de palier.
